# EUROPEAN PATENT APPLICATION

(11) **EP 1 056 308 A1**
(43) Date of publication of application: **29.11.2000**
(21) Application number: 00303277.8
(22) Date of filing: 18.04.2000
(51) Int. Cl.: H04Q 11/04, H04L 12/64

(54) **System and method for using a data network as a transmission medium in a local telecommunications loop**

(30) Priority: 11.05.1999 US 309348
(71) Applicant: LUCENT TECHNOLOGIES INC., Murray Hill, New Jersey 07974-0636 (US)
(72) Inventor: Casanova, Lynn Marie, Lockport, IL 60441 (US); Robinson, Dana Beverley, Chicago, IL 60649 (US); Sand, Paul Raymond, Woodridge, IL 60517 (US); Young, Claudis L., Aurora, IL 60504 (US)
(74) Representative: Buckley, Christopher Simon Thirsk

(57) **Abstract**

A system and method that uses the flexible bandwidth of a data network in order to provide service to remote subscriber loop carriers comprising a telephone switch configured to provide telephony services to a wireline terminal, an access network head end connected via circuit switch transmission facilities to the telephone switch and is configured to manage bearer channels in a data network, and a line unit separate from the telephone switch connected to the data network and the wireline terminals to interface the wireline terminals to the data network.

## Description

### Cross-Reference To Related Application

This patent application is related to U.S. Patent Application Casanova 2-2-6-2 entitled "System And Method For Variable Bandwidth Transmission Facilities Between A Local Telephone Switch And A Remote Line Unit", filed concurrently with this application.

### Field of the Invention

This invention relates to local telephone loop infrastructure and, more particularly, to the area of providing an economic, flexible transmission medium between the serving switch and remote line units.

### Background of the Invention

The increase in the number of telephones lines in use has exceeded the expectations of even the most optimistic operating company. Such increases, while good for revenue, require operating companies to expend money for equipment to support all of the new telephone lines. In predigital days, a new switching office was required every time a switching office's capacity was exceeded. In more modern times, remote line units connected to a switching system via trunks has increased the range and the capacity of modern switches. However, operating companies must provision such equipment for worst case (or near worst case) usage, which leads to overbuilding the system and unnecessary cost.

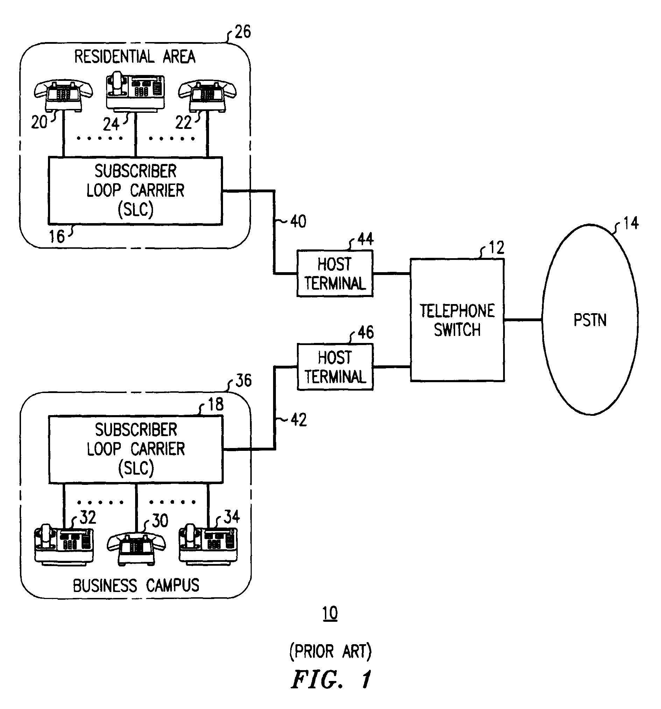

An example of the current art is shown in Figure 1. In the local service area 10, telephone switching system ("switch") such as a 5ESS® switch manufactured by Lucent Technologies is connected to the public switch telephone network (PSTN) 14 via a plurality of lines and trunks. The PSTN 14 comprises other local switches, long distance switches, wireless systems, etc., as is known in the art.

In order to support the expanding residential and business markets, the telephone switch 12 is connected to one or more subscriber loop carriers illustrated here by subscriber loop carriers (SLCs) 16 and 18. SLC 16 is illustrated as serving analog (plain old telephone service or POTS) telephones 20 and 22 and ISDN telephone 24 in a residential area 26. SLC 18 is shown as serving supporting a plurality of telephone systems represented by POTS telephone 30 and ISDN telephones 32 and 34 in business campus 36. Each SLC 16 and 18 provides the basic battery, over voltage, ringing, supervision, hybrid and testing (BORSHT) functions for its respective subscriber telephones and multiplexes traffic to and from their respective subscriber telephones on trunk groups 40 and 42 respectively. In the current art, trunk groups 40 and 42 are optical trunk groups and have a large bandwidth. Each trunk group 40 and 42 is terminated at a host terminal 44 and 46 at switch 12. Host terminals 44 and 46 provide conversion of calls from the trunk transmission format to a line appearance at telephone switch 12. In this manner, telephone 20 appears to telephone switch 12 to be a line directly connected to switch 12.

Each time a new housing development or office building is erected, the local carrier must plan for the additional traffic that will be generated. The local carrier must provide line terminations on the switch and transmission facilities to support the highest anticipated "busy hour" traffic. The increase in line terminations may even require an additional switching system if the anticipated traffic volume is sufficiently high.

Therefore, a problem in the art is that every new remote line unit requires expensive transmission facilities and modifications at the switching system to support a traffic volume that is only an estimate. Further, if the traffic estimate is low, additional transmission (and potentially switching) facilities must be added. If the traffic estimate is high, the operating company loses money on its investment in physical plant.

### Summary of the Invention

This problem is solved and a technical advance is achieved in the art by a system and method that uses the flexible bandwidth of a data network in order to provide service to new remote subscriber line units without necessarily adding transmission facilities. According to this telecommunication systems, a telephone switch is configured to provide telephony services to a wireline terminal such as a POTS or ISDN telephone set. An access network head end is connected via circuit switch transmission facilities (i.e., trunks) to the telephone switch and is configured to manage reserved packet traffic bandwidth ("bearer channels") in a data network. There is also a line unit separate from the telephone switch connected to the data network and the wireline terminals to interface the wireline terminals to the data network. The data network is, advantageously, a packet network, i.e., an ATM network. The access network head end includes a table of destination remote line units for each telephone number. The remote line unit includes a table that list associated access network head ends for each telephone attached to it. Both tables include the address in the packet network required for delivering data to the destinations.

Further, a method according to this invention comprises the steps of receiving a call for a wireline terminal at the telephone switch, delivering the call to the access network head end, determining a data network address of a line unit connected to the wireline terminal establishing a bearer channel between the access network head end and the line unit and via the packet network extending the call to the wireline terminal.

### Brief Description of the Drawings

A more complete understanding of the invention may be obtained from consideration of the following description in conjunction with the drawings in which:
FIG. 1 is a block diagram of a prior art telephone switch and subscriber loop carrier;
FIG. 2 is a block diagram of a telephone switch that supports a plurality of remote line units according to an exemplary embodiment of this invention;
FIG. 3 is a more detailed block diagram of the access network head end and an exemplary remote line unit of FIG. 2;
FIG. 4 is an exemplary call flow for a call origination from a remote line unit according to an exemplary embodiment of this invention;
FIG. 5 is an exemplary call flow of a termination to a remote line unit of FIG. 1;
FIG. 6 is an exemplary message flow of a power ring test;
FIG. 7 is an exemplary message flow of a loop backtest; and
FIG. 8 is a block diagram of a more extensive local network according to an aspect of this invention.

### Detailed Description of the Invention

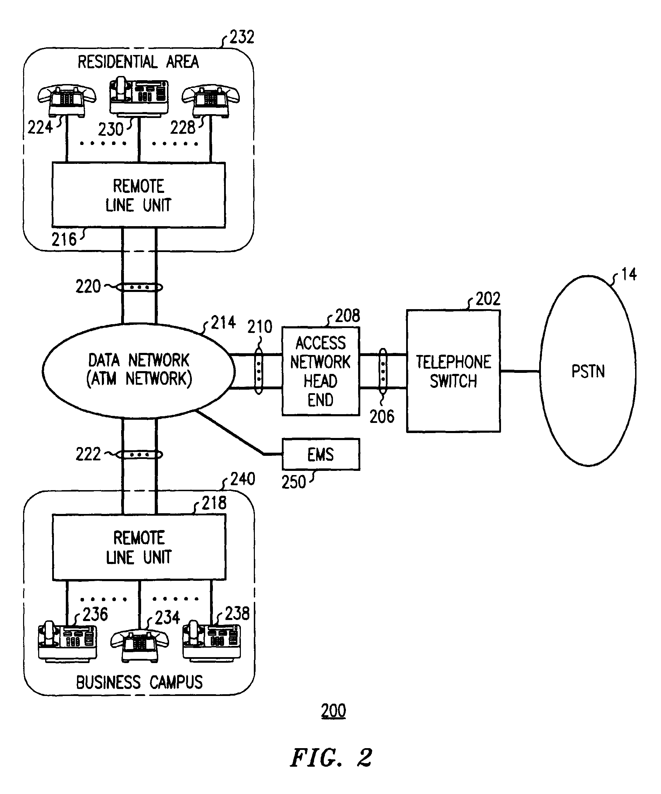

Figure 2 illustrates a block diagram of a telephone network 10 that provides service to remote line units through a data network according to an exemplary embodiment of this invention. In this exemplary embodiment, PSTN 14 is connected to a telephone switch 202. Telephone switch 202 is connected by one or more trunks 206 to an access network head end 208. Only one access network head end 208 is needed for a plurality of remote line units, thus providing a cost saving over the one-to-one host terminals (44 and 46, FIG. 1).

Access network head end 208, as will be described further below, communicates with telephone switch 202 by means of V5, TR303 or some form of proprietary protocol as is known in the art. (For example, in FIG. 1 the host terminals 44 and 46 communicate with subscriber loop carriers 16 and 18, respectively, via TR303, V5 or some form of proprietary protocol.) Access network head end 208 determines the destination remote line unit for a call, delivers the call to the remote line unit, converts the communication content (voice or data) and signaling into data packets and sends the data packets to the remote line units on line 210 which, in this exemplary embodiment, may be an OC3-based link.

Information delivered on line 210 is received in data network 214 and routed to its destination. In this exemplary embodiment, data network 214 comprises an ATM network wherein the communication content and signaling is packetized into the payload of an ATM cell. However, ATM is only exemplary. Other forms of data networks (such as IP) can be used without departing from the scope of this invention.

Data network 214 delivers data packets addressed to remote line units 216 and 218, in accordance with one aspect of this invention. Remote line units 216 and 218 may be connected to data network 214 via OC3 links, for example, or some other form of optical or metallic trunks 220 and 222 (respectively).

Remote line unit 216 provides telephone services for wireline terminals such as analog telephones 224 and 228 and digital (such as ISDN) telephones 230 according to this exemplary embodiment of this invention. Of course, remote line unit 216 may support a large number of wireline terminals, depending upon the mix of analog and digital wireline terminals and the traffic in the area served. In this exemplary embodiment, remote line unit 216 serves a residential area 232.

Likewise, remote line unit 218 supports a plurality of analog telephones represented by analog telephone 234 and digital phones represented by ISDN phones 236 and 238. Remote line unit 218 serves a business campus 240.

In telephone network 200, access network head end 208 sets up one or more "bearer channels" of packet data capacity to each remote line unit 216 and 218. In other words, a predetermined amount of data packet traffic through data network 214 is reserved, in order to maintain the bandwidth (data packet traffic) necessary to sustain voice-quality service with acceptable blocking. In this manner, the access network head end 208 can control and maintain its required bandwidth through data network 214 without having to allocate data packets on an "as needed" basis, which could cause delay in delivery of packets during times of heavy packet network usage. Such delay would cause the voice traffic to deteriorate to unacceptable quality. However, there is no one-to-one correspondence of telephone to line appearance on the switch 202. This means that access network head end 208 may support more telephone lines than a current host terminal.

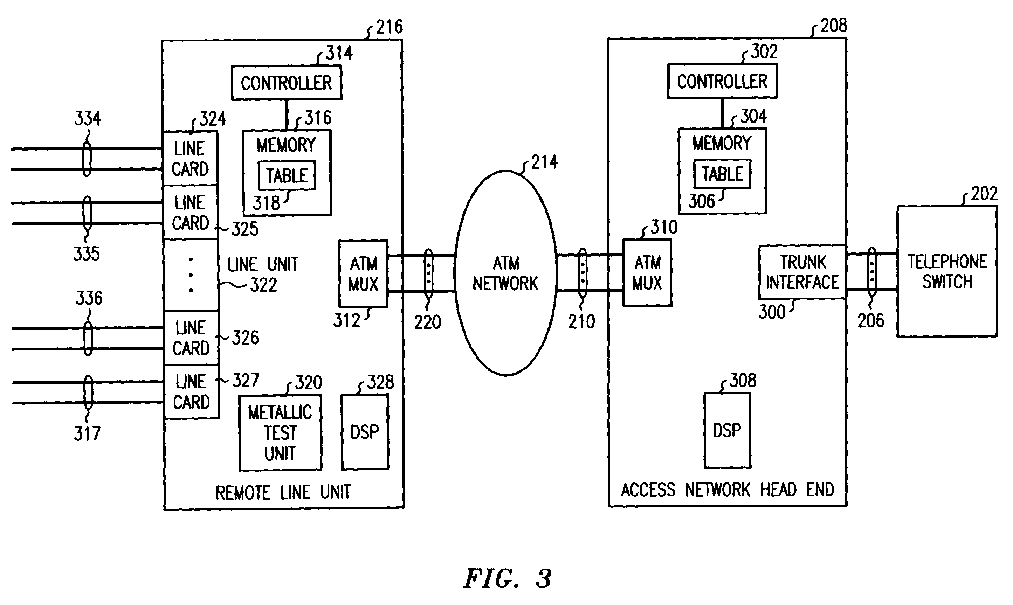

Turning now to Figure 3, a more detailed block diagram of access network head end 208 and remote line unit 216 is shown. Remote line unit 216 is exemplary and the block diagram may also represent remote line unit 218 with little or no modification. In this exemplary embodiment, telephone switch 202 is connected via one more trunks 206 to access network head end 208 at trunk interface 300. Trunk interface 300 provides the protocol stack necessary for communication with telecommunication switch 202. This protocol stack may provide the protocol for V5, TR303 or a proprietary protocol, as used in the specific application.

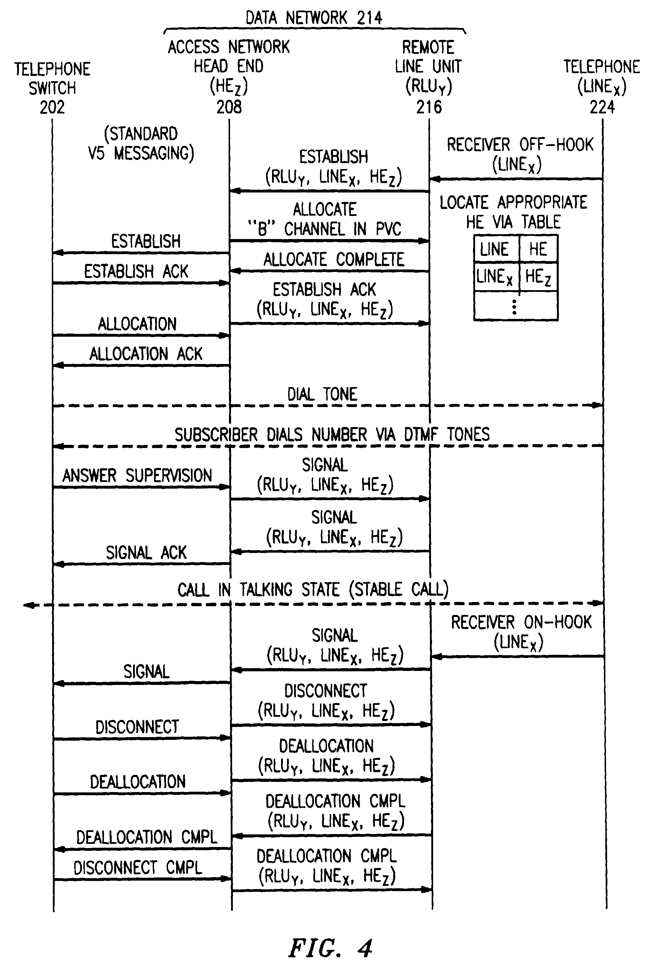

Access network head end 208 further includes a controller 302 that controls the functionality of access network head end 208 to facilitate communication. Controller 302 operates on programs and data stored in memory 304. Such data includes a table 306 used to translate destination telephone numbers (or line identifications) into a destination address in the ATM network 214. The use of table 306 will be discussed further below in connection with Figures 4 through 8. Access network head end 208 further includes a digital signal processor (DSP) 308 to recognize tones from telephone switch 202 and from analog telephones (such as telephones 224 and 228 FIG. 2), and to generate tones, such as dial tone, reorder and the like as well as convert packet voice to circuit voice and vice versa. Access network head end 208 further includes, in this embodiment, an ATM multiplexer (ATM MUX) 310 which, as known in the art, receives data to be transmitted via the ATM network 214. Conversely, ATM MUX 310 receives data from ATM network 214.

ATM MUX 310 sends data via one or more links, which in one preferred embodiment comprises optical links 210, through ATM network 214 to further links 220 to remote line unit 216. Remote line unit 216 sends and receives data from ATM network 214 via an ATM MUX 312. ATM MUX 312 is the same or similar to ATM MUX 310. Remote line unit 216 includes controller 314 which operates on programs and data stored in memory 316. Such data includes a table 318 which is used to translate the originating telephone to an address of an access network head end. Remote line unit also includes metallic test unit 320 that provides line test capability for each line connected to remote line unit 216.

Remote line unit 216 includes line unit 322 which comprises a plurality of line cards 324, 325, 326 and 327. Line cards 324-327 may be analog, digital or a mix of the two. Line cards 324-327 provide the BORSHT functions (battery, over voltage, ringing, supervision, hybrid and testing) as is known in the art. Line cards 324-327 are connected to tip ring pairs 334-337 respectively which provides communication of metallic interface to telephones served by the area of remote line unit 216. Remote line unit 216 also includes a DSP 328 that recognizes and generates tones and converts packet voice to circuit voice, and vice versa.

Turning now to Figure 4, a call flow showing call origination from, for example telephone 20, is illustrated. Call processing starts when telephone 224 goes offhook, which is detected at remote line unit 216. Remote line unit 216 performs a table look up to determine the data address of an access network head end associated with the telephone 20. In this example, the head end is access network head end 208 and remote line unit 216 sends an establish data message to the address of access network head end 208 to establish a call. Access network head end 208 returns an "allocate B channel" message and sends the identification of the allocated channel to remote line unit 216. This step establishes a bearer channel through the data network from the reserved data network bandwidth. Substantially simultaneously, access network head end 208 sends an "establish" message to telephone switch 202, which returns an "establish acknowledgment" message back. Remote line unit sends an "allocation complete" message to access network head end 208, which sends an "establish acknowledgment" back.

Telephone switch 202 next sends an "allocation" message to access network head end 208, which returns an "acknowledgment" message to the telephone 202 switch. At this time, the telephone switch 202 applies dial tone through lines 206 to access network head end 208, which packetizes the tone into data packets (ATM packets in this exemplary embodiment) and sends the dial tone to remote line unit 216. Remote line unit 216 translates the dial tone into analog signals and sends the dial tone to telephone 224.

The subscriber then enters dialed digits via DTMF tones (or dial pulses), which are received in remote line unit 216, transformed from analog to digital, packetized and sent across data network 214 to access network head end 208. Access network head end 208 depacketizes and forwards the digits to telephone switch 202, which processes the call to the destination by the telephone number entered. When the call is answered, the telephone switch 202 sends a signal to access network head end 208 which forwards the signal to remote line unit 216. An acknowledgment is returned and the call is established.

To end the call in this example, telephone 224 goes on hook first (however, the signaling would be substantially the same if the called party went on hook first). To this end, an onhook signal is received at remote line unit 216. Remote line unit 216 forwards the on hook signal to the access network head end 208, which forwards the signal to telephone switch 202. A "disconnect and deallocation" message is sent from telephone switch 202 to access network head end 208 which deallocates the bearer channel and forwards this message to remote line unit 216. Remote line unit 216 sends a "deallocation complete" message to access network head end 208 which forwards the "deallocation complete" message to telephone switch 202. Finally, telephone switch 202 sends a "disconnect complete" message to access network head end 208 which completes the release by forwarding the message to remote line unit 216.

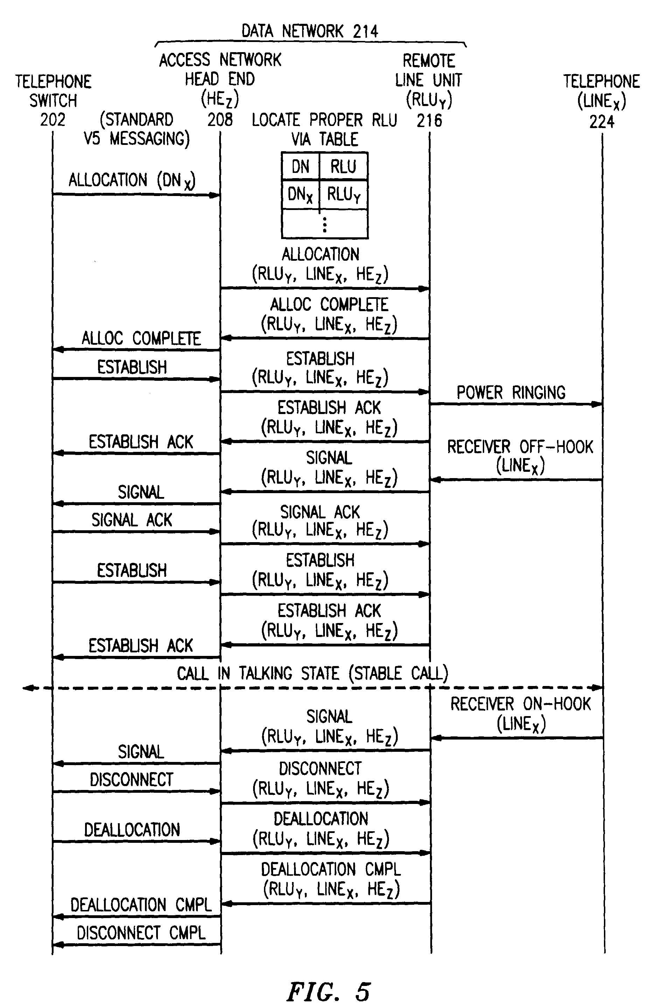

Turning now to Figure 5, a call termination (i.e., a call originating in PSTN 14 is arriving for telephone 224) is shown. The call is received at telephone switch 202, which sends an "allocate" message to access network head end 208, including the directory number of the destination telephone 224. The access network head end 208 performs a table lookup in table 306 to determine the address of the destination remote line unit and allocates a bearer channel through the data network. Access network head end 208 sends an allocation message to remote line unit 216, which returns an allocation complete message to access network head end 208. Access network head end 208 sends an allocation complete message to telephone switch 202.

Next, telephone switch 202 sends an establish message to access network head end 208, which forwards it to remote line unit 216. Remote line unit 216 then applies power ringing through the telephone line to telephone 224. The remote line unit 216 sends an establish acknowledgment (once power ringing has been started) to access network head end 208, which forwards the message to telephone switch 202. When telephone 224 goes offhook, which is detected by remote line unit 216. A signal is sent to access network head end 208 and forwarded to telephone switch 202 that the call has been answered. The signal is acknowledged first through the access network head end 208 and then acknowledged to the remote line unit 216. Telephone switch 202 then sends an establish message through access network head end 208 to remote line unit which is acknowledged. At this time the call is in the talk state, meaning that there is a stable call.

Eventually telephone 224 goes onhook, which is detected at remote line unit 216. Remote line unit 216 sends a signal to access network head end 208, which repackages and forwards the signal to telephone switch 202. A "disconnect" message is sent from telephone switch 202 to access network head end 208 and forwarded to remote line unit 216. Further, a channel "deallocation" message is sent from telephone switch 202 to access network head end 208, and is forwarded to remote line unit 216. Remote line unit 216 then sends a "deallocation complete" message to access network head end 208, which is forwarded to telephone switch 202. Access network head end 208 then sends a "disconnect complete" message to telephone switch 202.

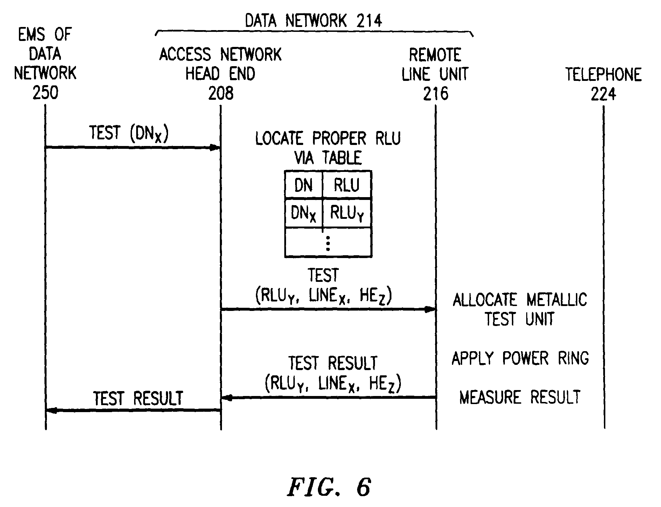

To have all of the functionality of conventional SLC's, switch 202 must be able to test the lines and virtual trunks. Turning now to Figure 6, the message flow for a power ring test example is shown. EMS access network 610 sends a test message to access network head end 208 that includes the directory number of the telephone to be tested. The access network head end 208 locates the proper remote line unit by looking up the directory number in the table 306. In this instance, access network head end 208 uses the data network address of remote line unit 216 to send a test message. Remote line unit 216 allocates metallic test unit to apply power ring to telephone 224. The results are measured at the metallic test unit and the remote line unit forwards the test results (including the line and the remote unit identification) to access network head end 208, which forwards the test results to EMS of access network 610.

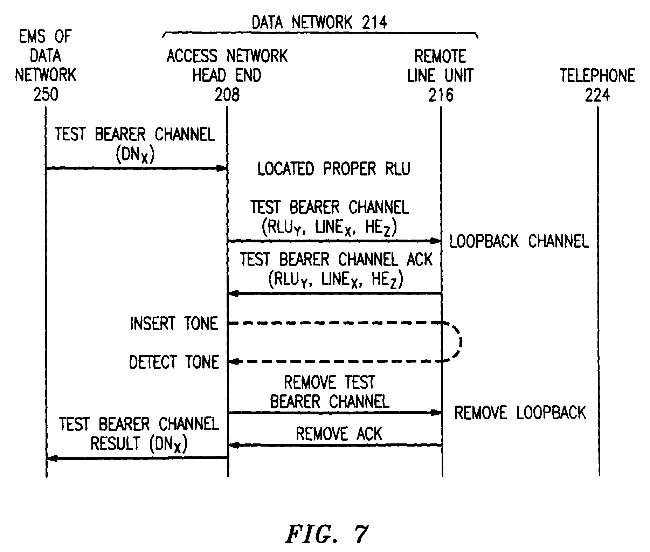

Turning now to Figure 7, a message flow for bearer channel loop back test is shown. The EMS of access network 610 sends a "test bearer channel" message including a directory number to access network head end 208. Access network head end 208 performs the table lookup to find the remote line unit associated with that directory number and then sends a "test bearer channel" message to the remote line unit. Remote line unit 216 then uses a loopback channel or other channel to send a "test bearer channel acknowledgement" message back to the access network head end 208. Access network head end 208 then inserts a tone (using DSP 308) into the system which is digitized, packetized and sent from access network head end to 208 to remote line unit 216. Remote line unit 216 immediately returns the packet to access network head end 208 to detect the tone. Access network head end 208 then sends a remove "test bearer channel" message to remote line unit 216 which removes the loopback and sends an acknowledgement to access network head end 208. Access network head end 208 then sends a "test bearer channel result" message with the results back to telephone switch 202.

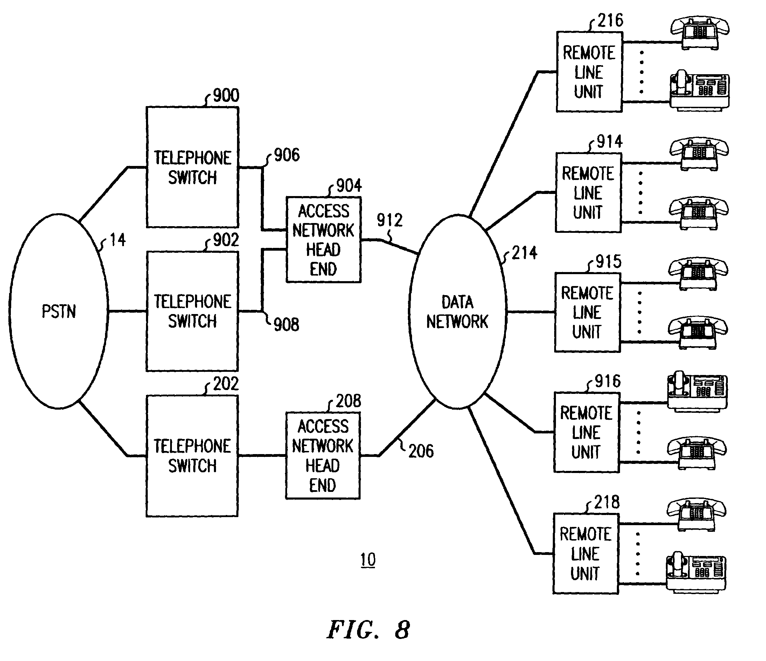

Turning now to Figure 8, a block diagram of telephone network 10 showing a more extensive use of remote line units and access network's head ends are shown. In addition to telephone switch 202, PSTN 14 is also connected to telephone switch 900 and 902. Telephone switches 900 and 902 share access network head end 904 by way of trunks 906 and 908 as described above. Access network head end 904 is connected to data network 214 via optical link 912 which is similar to link 206. In addition to supporting remote line units 216 and 218, the configuration of telephone network 10 can also support a plurality of other remote line units represented by remote line units 914, 915 and 916.

Each telephone connected to any of the remote line units 216, 218 and 914-916 may be supported by either access network head end 208 and 904. All of the telephones connected to a remote line unit do not have to have an origination on the same access network head end or the same switch, for that matter. Therefore, the system provides a unique method for balancing loads among telephone switches 202, 900 and 902, thus creating an even more flexible network than is currently possible.

It is to be understood that the above-described embodiment is merely an illustrative principle of the invention, and that many variations may be devised by those skilled in the art without departing from the scope of this invention. It is, therefore, intended that such variations be included within the scope of following claims.

## Claims

1. A telecommunication system for providing service to a wireline terminal comprising:
a telephone switch configured to provide telephony service to said wireline terminal;
a data network;
an access network head end connected to said data network and to said telephone switch and configured to manage bearer channels in the data network; and
a line unit separate from the telephone switch connected to the data network and the wireline terminals and configured to interface the wireline terminal to one of the bearer channels.

2. A telecommunications system according to claim 1 wherein said data network comprises a packet network.

3. A telecommunications system according to claim 1 wherein said data network comprises an ATM network.

4. A telecommunications system according to claim 1 wherein the telephone switch and the access network head end communicate by a standard protocol over circuit switched transmission facilities.

5. A telecommunications system according to claim 1 wherein said access network head end includes a controller having a table for translating a line identification to a line unit address in the data network for establishing a bearer channel to the line unit associated with the line identification.

6. A telecommunications system according to claim 1 wherein said access network head end includes a controller having a table for translating a directory number to a line unit address in the data network for establishing a bearer channel to the line unit associated with the directory number.

7. A telecommunications system according to claim 1 wherein line unit comprises a controller having a table for translating an identification of a wireline terminal to an access network head end address in the data network.

8. A method for establishing a telecommunications connection between a telephone switch and a wireline terminal, said telephone switch being connected to an access network head end via circuit-switched transmission facilities, said access network head end being connected to a data network, a line unit connected to the data network and to the wireline terminal, said method comprising the steps of:
receiving a call for the wireline terminal at the telephone switch;
delivering the call to the access network head end;
determining a data network address of the line unit connected to the wireline terminal;
establishing a bearer channel between the access network head end and the line unit through the data network; and
extending the call to the wireline terminal.

9. A method for establishing a telecommunications connection between a wireline terminal and a telephone switch, said telephone switch being connected to an access network head end via circuit-switched transmission facilities, said access network head end being connected to a data network, a line unit connected to the data network and to the wireline terminal, said method comprising the steps of:
receiving a request for service from the wireline terminal at the line unit;
determining a data network address of the access network head end associated with the wireline terminal;
establishing a bearer channel between the access network head end and the line unit through the data network; and
extending the call from the access network head end to the telephone switch.

10. A telecommunications system for providing service to a plurality of wireline terminals, said telecommunications system comprising:
a telephone switch configured to provide telephony service to said wireline terminal;
an access network head end connected via circuit-switched transmission facilities to said telephone switch configured to manage bearer channels in a data network;
a data network carrying the bearer channels; and
a plurality of line units separate from the telephone switch connected to the data network and the plurality of wireline terminals configured to interface the wireline terminal to one or more of the bearer channels according to the access network head end.
